# EUROPÄISCHE PATENTANMELDUNG

(11) **EP 1 491 689 A2**
(43) Veröffentlichungstag der Anmeldung: **29.12.2004**
(21) Anmeldenummer: 04014764.7
(22) Anmeldetag: 24.06.2004
(51) Int. Cl.: E03C 1/04, F16B 43/00

(54) **Montageelement sowie seine Verwendung zur Befestigung eines Bedienelements an einer Spüle**

(30) Priorität: 26.06.2003 DE 10328647
(71) Anmelder: VIEGA GmbH & Co. KG., 57439 Attendorn (DE); Blanco GmbH & Co. KG, 75038 Oberderdingen (DE)
(72) Erfinder: Viegener, Walter, 57439 Attendorn (DE); Bittger, Dirk, Dipl.-Ing., 76133 Karlsruhe (DE); Klump, Eberhard, 75015 Bretten-Diedelsheim (DE)
(74) Vertreter: Dantz, Jan Henning

(57) **Zusammenfassung**

Ein Montageelement, insbesondere zur Befestigung von Bedienelementen an Spülen, wie einer Drehbetätigung, umfasst eine Mutter (1), die über ein Innengewinde an einem Rohr (3) mit Außengewinde (9) festlegbar ist und die einen sich nach außen erstreckenden Flanschabschnitt (10) aufweist. Erfindungsgemäß ist an dem Flanschabschnitt ein Gleitring (2) vorfixiert gehalten. Dadurch wird bei der Montage die Reibung zwischen dem Montageelement und einer Anlagefläche vermindert, da nur die Reibkraft zwischen Gleitring (2) und Mutter ( 1 ) überwunden werden muss, die geringer ist als die Reibkraft zwischen der Mutter (1) und einer Anlagefläche eines Möbels.

## Beschreibung

Die vorliegende Erfindung betrifft ein Montageelement, insbesondere zur Befestigung von Bedienelementen an Spülen, mit einer Mutter, die über ein Innengewinde an einem Rohr mit Außengewinde festlegbar ist und einen sich nach außen erstreckenden Flanschabschnitt aufweist. Ferner richtet sich die Erfindung auf ein Bedienelement für eine Spüle, mit einer als Rohr mit einem Außengewinde ausgebildeten Durchführung, die an einer Platte festlegbar ist, und einen Drehknopf zur Betätigung eines Spülenelementes aufweist.

Es gibt Montageelemente für Bedienelemente an Spülen, beispielsweise Drehbetätigungen, die an einer Durchführung fixiert werden, um eine Platte, beispielsweise eine Arbeitsplatte einer Küche zu durchgreifen. An der Oberseite des Bedienelementes befindet sich ein Drehknopf, der zur Betätigung eines Spülenelementes, wie einem Ablauf drehbar ist. An der Durchführung ist im oberen Bereich ein Ring vorgesehen, der abgedichtet auf einer Platte abgestützt ist. Zur Befestigung der Bedienelement ist eine Mutter vorgesehen, die von unten auf die als Rohr ausgebildete Durchführung aufgeschraubt wird. Diese Art der Montage hat den Nachteil, dass beim Anziehen der Mutter eine relativ hohe Reibung zwischen Platte und Mutter auftritt, so dass die maximale Klemmkraft begrenzt ist. Ferner können Toleranzen durch eine Schiefstellung nur schlecht ausgeglichen werden, da die Mutter über das Gewinde direkt an die Platte mit einer ebenen Anlagefläche angedrückt wird.

Es ist daher Aufgabe der vorliegenden Erfindung ein Montageelement und ein Bedienelement für eine Spüle zu schaffen, die leicht zu montieren sind und auch einen gewissen Toleranzausgleich vornehmen können.

Diese Aufgabe wird mit einem Montageelement mit den Merkmalen des Anspruches 1 und einem Bedienelement für eine Spüle mit den Merkmalen des Anspruches 10 gelöst.

Erfindungsgemäß weist die Mutter einen Flanschabschnitt auf, an dem ein Gleitring vorfixiert gehalten ist. Dadurch wird bei der Montage die Reibung zwischen dem Montageelement und einer Anlagefläche vermindert, da nur die Reibkraft zwischen Gleitring und Mutter überwunden werden muss, die geringer ist als die Reibkraft zwischen der Mutter und einer Anlagefläche eines Möbels. Ferner lassen sich dadurch besser Toleranzen ausgleichen, da der Gleitring auch mit einer gewissen Schrägstellung an der Mutter aufgenommen sein kann, ohne dass die Funktion des Montageelementes beeinträchtigt wird. Durch die Vorfixierung des Gleitringes an der Mutter wird die Handhabung bei der Montage vereinfacht, da der Monteur nur ein Teil handhaben muss. Mit dem Gleitring lässt sich dann ein höheres Anzugsmoment erreichen, da nur die geringere Reibung zwischen Gleitring und Mutter beim Anziehen wirkt. Der Gleitring erfüllt dabei zusätzlich die Funktion einer Unterlegscheibe und verhindert ein Lösen der Mutter beim Setzen (Relaxation) des Materials.

Gemäß einer bevorzugten Ausführungsform ist der Gleitring über eine Rastverbindung an dem Flanschabschnitt drehbar gehalten. Dadurch lässt sich die Einheit aus Mutter und Gleitring einfach zusammensetzen. Hierfür weist der Gleitring vorzugsweise an seiner äußeren Umfangsfläche eine ringförmige Ausnehmung auf, in die mindestens ein Vorsprung an dem Flanschabschnitt eingreift. Dabei kann ein gewisses Spiel des Gleitringes für eine besonders leichtgängige Verbindung sorgen.

Wenn der Gleitring in axialer Richtung über die Mutter hervorsteht, kann über den Gleitring besonders gut ein Toleranzausgleich erfolgen, beispielsweise wenn die Anlagefläche leicht schräg ausgebildet ist.

Damit die Reibung zwischen Mutter und Gleitring gering ist, sind diese vorzugsweise aus unterschiedlichen Materialien hergestellt.

Für eine werkzeugfreie Montage sind an der Mutter vorzugsweise sich radial nach außen erstreckende Stege angeformt.

Die Mutter und der Gleitring lassen sich kostengünstig aus Kunststoff herstellen, wobei auch andere Materialien eingesetzt werden können. Dabei können Materialmischungen und Verbundwerkstoffe für Gleitring und Mutter zum Einsatz kommen, damit bei geringer Reibung eine hohe Stabilität gewährleistet werden kann.

Erfindungsgemäß wird auch ein Bedienelement für eine Spüle bereitgestellt, bei der ein erfindungsgemäßes Montageelement an einem Rohr mit Außengewinde festgelegt ist. Das Bedienteil kann eine Drehbetätigung sein und einen Drehknopf haben.

Die Erfindung wird nachfolgend anhand eines Ausführungsbeispiels mit Bezug auf die beigefügten Zeichnungen näher erläutert. Es zeigen:

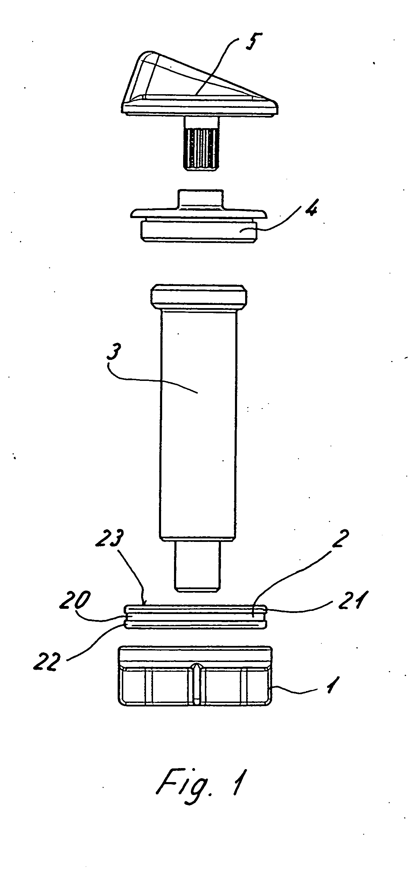

- Fig. 1: eine Explosionsdarstellung eines Bedienelementes mit einem Ausführungsbeispiel eines erfindungsgemäßen Montageelementes;

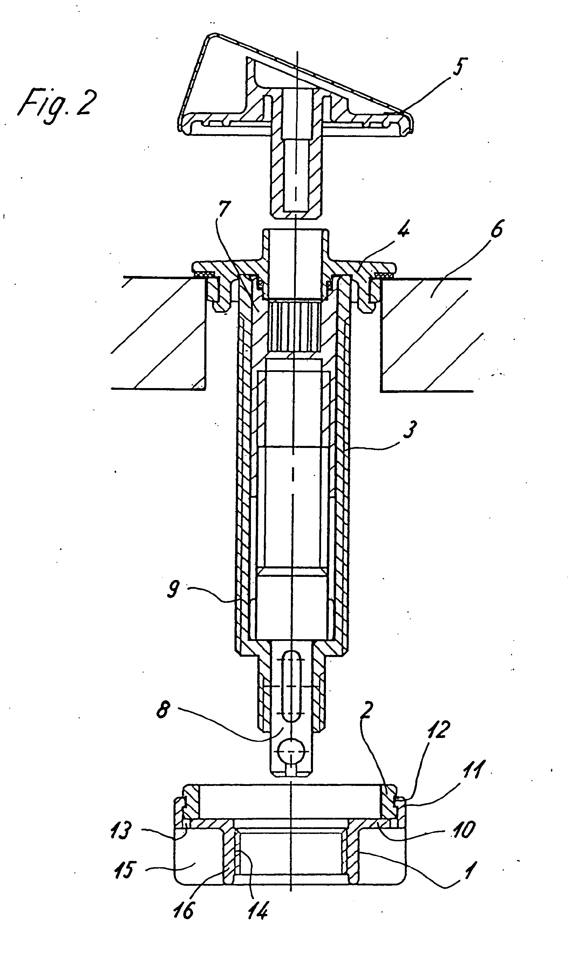

- Fig. 2: eine geschnittene Seitenansicht des Bedienelementes der Fig. 1;
- Fig. 3A: eine perspektivische Ansicht des Montageelementes der Drehbetätigung der Fig. 1, und

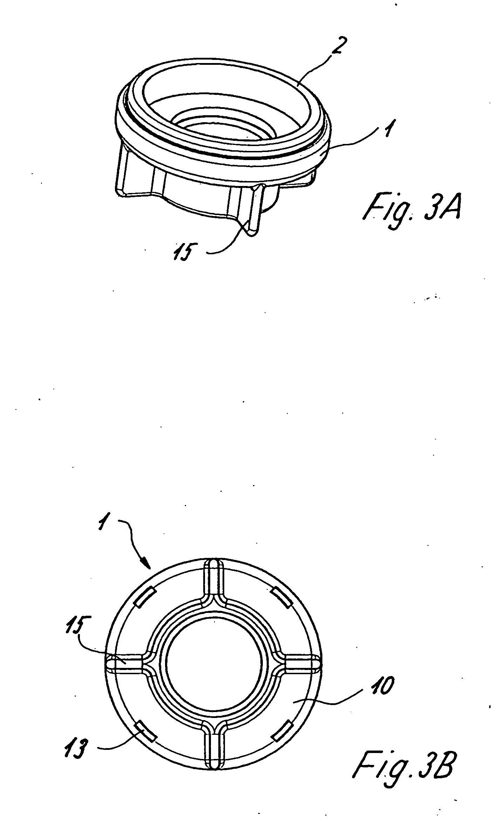

- Fig. 3B: eine Draufsicht auf das Montageelement der Fig. 3A.

Ein Bedienelement für eine Spüle umfasst eine Mutter 1, in der ein Gleitring 2 aufgenommen ist. Die Mutter 1 und der Gleitring 2 bilden ein Montageelement, das auf ein Rohr 3 als Durchführung aufschraubbar ist. An dem Rohr 3 ist ein Auflageelement 4 montierbar, das über eine Öffnung in der Platte 6 auflegbar ist. Ferner ist ein Drehknopf 5 vorgesehen, mittels dem ein Funktionselement, beispielsweise an einer Spüle, betätigbar ist. Zur Kraftübertragung ist der Drehknopf 5 in eine Drehstange 7 einsteckbar, die mit einem hervorstehenden Abschnitt 8 ein weiteres Bauelement antreibt.

Das Montageelement ist auf ein Außengewinde 9 des Rohres 3 aufschraubbar, um das Bedienelement klemmend an der Platte 6 festzulegen.

Hierfür weist die Mutter 1 ein Innengewinde 14 auf, das mit dem Außengewinde 9 kämmt. Die Mutter 1 ist ferner mit einem Flanschabschnitt 10 versehen, der sich radial nach außen erstreckt und an dem ein parallel zur Mittelachse der Mutter 1 verlaufender Stegabschnitt 11 angeformt ist.

Zur Verbindung mit einem Gleitring 2 ist an dem Stegabschnitt 11 ein nach innen hervorstehender Vorsprung 12 ausgebildet, der in eine ringförmige Aussparung 20 an dem Gleitring 2 eingreift. Die Aussparung 20 ist dabei zwischen einem oberen Randabschnitt 21 und einem unteren Randabschnitt 22 gebildet.

Zur Montage wird der Gleitring 2 in die Mutter 1 eingesteckt, wobei die Mutter aus einem elastischen Material, beispielsweise Kunststoff gebildet ist, so dass der Steg 11 sich nach außen aufweitet, bis der Vorsprung 12 in die Ausnehmung 20 einrastet. Der Gleitring 2 kann dabei mit einem gewissen Spiel an der Mutter 1 festgelegt sein. An dem Flanschabschnitt 10 sind ferner Schlitze 13 vorgesehen, über die ein Fluid oder Verunreinigungen abgeführt werden können.

Die Mutter weist ferner an dem Flanschabschnitt 10 und einer ringförmigen Wand 16 sich radial nach außen erstreckende Stege 15 auf, an denen die Mutter 1 bei der Montage gegriffen und gedreht werden kann.

Das Montageelement lässt sich so auf das Außengewinde 9 des Rohres 3 aufschrauben, wobei zuerst eine Anlagefläche 23 des Gleitringes 2 an der Unterkante der Platte 6 anliegt. Sobald durch die Klemmkräfte die Reibung zwischen Platte 6 und Gleitring 2 größer ist als die Reibung zwischen Gleitring 2 und der Mutter 1, hört der Gleitring 2 auf zu drehen und kann über die Mutter 1 leichtgängig festgezogen werden. Dadurch lassen sich höhere Anzugsmomente realisieren. Sollte die Platte 6 leicht schief gestellt sein, kann der Gleitring 2 die Schiefstellung etwas ausgleichen.

In dem dargestellten Ausführungsbeispiel ist die ringförmigen Ausnehmung 20 am äußeren Umfang des Gleitringes 2 angeordnet. Es ist auch möglich, eine entsprechende ringförmige Ausnehmung am inneren Umfang des Gleitringes vorzusehen, in die dann ein oder mehrere mit der Mutter 1 verbundene Vorsprünge eingreifen. Ferner können zur Vorfixierung des Gleitringes auch stirnseitig angeordnete Rastmittel vorgesehen sein, beispielsweise in Form einer Nut, in die entsprechende Klemmelemente eingreifen.

Als Material für die Mutter 1 und den Gleitring 2 kommen vorzugsweise Kunststoffe zum Einsatz, beispielsweise hat sich die Materialpaarung ABS und PP bewährt. Auch andere Materialpaarungen können eingesetzt werden.

## Patentansprüche

1. Montageelement, insbesondere zur Befestigung von Bedienelementen an Spülen mit einer Mutter (1), die über ein Innengewinde an einem Rohr (3) mit Außengewinde (9) festlegbar ist und einen sich nach außen erstreckenden Flanschabschnitt (10) aufweist, **dadurch gekennzeichnet, dass** an dem Flanschabschnitt ein Gleitring (2) vorfixiert gehalten ist.

2. Montageelement nach Anspruch 1, **dadurch gekennzeichnet, dass** der Gleitring (2) über eine Rastverbindung an dem Flanschabschnitt (10) drehbar gehalten ist.

3. Montageelement nach Anspruch 1 oder 2, **dadurch gekennzeichnet, dass** der Gleitring (2) an seiner äußeren Umfangsfläche eine ringförmige Ausnehmung (20) aufweist, in die mindestens ein Vorsprung (12) an dem Flanschabschnitt (10) eingreift.

4. Montageelement nach Anspruch 1 oder 2, **dadurch gekennzeichnet, dass** der Gleitring (2) an seiner inneren Umfangsfläche eine ringförmige Ausnehmung (20) aufweist, in die mindestens ein Vorsprung (12) an dem Flanschabschnitt (10) eingreift.

5. Montageelement nach einem der Ansprüche 1 bis 4, **dadurch gekennzeichnet, dass** der Gleitring (2) in axialer Richtung über die Mutter (1) hervorsteht.

6. Montageelement nach einem der Ansprüche 1 bis 5, **dadurch gekennzeichnet, dass** die Mutter (1) und der Gleitring (2) aus unterschiedlichen Materialen hergestellt sind.

7. Montageelement nach einem der Ansprüche 1 bis 6, **dadurch gekennzeichnet, dass** an der Mutter (1) sich radial nach außen erstreckende Stege (15) angeformt sind.

8. Montageelement nach einem der Ansprüche 1 bis 7, **dadurch gekennzeichnet, dass** im Flanschabschnitt (10) Schlitze (13) ausgespart sind.

9. Montageelement nach einem der Ansprüche 1 bis 8, **dadurch gekennzeichnet, dass** die Mutter (1) und der Gleitring (2) aus Kunststoff hergestellt sind.

10. Bedienelement für eine Spüle, mit einer als Rohr (3) mit einem Außengewinde (9) ausgebildeten Durchführung, die an einer Platte (6) festlegbar ist, und einem Bedienteil (5) zur Betätigung eines Spülenelementes, **dadurch gekennzeichnet, dass** die Bedienelement ein Montageelement nach einem der vorhergehenden Ansprüche aufweist.
